# EUROPÄISCHE PATENTSCHRIFT

(11) **EP 4 221 996 B1**
(45) Veröffentlichungstag und Bekanntmachung des Hinweises auf die Patenterteilung: **04.12.2024**
(21) Anmeldenummer: 21786329.9
(22) Anmeldetag: 21.09.2021
(51) Int. Cl.: B60C 11/12

(54) **FAHRZEUGLUFTREIFEN**
PNEUMATIC TYRE FOR A VEHICLE
PNEU POUR UN VÉHICULE

(30) Priorität: 01.10.2020 DE 102020212456
(43) Veröffentlichungstag der Anmeldung: 09.08.2023
(73) Patentinhaber: Continental Reifen Deutschland GmbH, 30175 Hannover (DE)
(72) Erfinder: LACKO, Peter, 30165 Hannover (DE); VOJTUS, Michal, 30165 Hannover (DE); SHADOMY, Spencer, 30165 Hannover (DE); MEIER, Nico, 30165 Hannover (DE)
(74) Vertreter: Continental Corporation
(86) Internationale Anmeldenummer: PCT/DE2021/200124
(87) Internationale Veröffentlichungsnummer: WO 2022/068998

(56) Entgegenhaltungen:
- EP-A1- 3 415 343
- US-A1- 2011 108 176
- US-A1- 2012 234 443
- US-A1- 2014 166 173
- US-A1- 2017 253 090
- US-A1- 2019 084 352

## Beschreibung

Die Erfindung betrifft einen Fahrzeugluftreifen, insbesondere Nutzfahrzeugreifen, mit einem Laufstreifen mit zumindest einer in Umfangsrichtung umlaufenden Profilrippe, welche an zumindest einer Seite von einer auf Profiltiefe ausgeführten Umfangsrille begrenzt und welche von in Draufsicht zumindest in Gruppen parallel zueinander sowie zur axialen Richtung unter einem Winkel von 0° bis 50° verlaufenden, eine Breite von 0,4 mm bis 3,0 mm aufweisenden Einschnitten durchquert ist, wobei jeder Einschnitt einen Einschnitthauptabschnitt aufweist und in jede die Profilrippe begrenzende Umfangsrille mit jeweils einem Einschnittrandabschnitt einmündet, wobei der Einschnitthauptabschnitt und der Einschnittrandabschnitt in radialer Richtung jeweils eine Tiefe aufweisen, wobei die Tiefe des Einschnitthauptabschnittes geringer ist als die Tiefe des Einschnittrandabschnittes und die Tiefe des Einschnittrandabschnittes 200% bis 400% der Tiefe des Einschnitthauptabschnittes beträgt, wobei der Einschnittrandabschnitt im Inneren der Profilrippe über seine gesamte Erstreckung in einen von der Umfangsrille ausgehenden, gegenüber dem Einschnitt breiter ausgeführten Hohlraum einmündet.

Ein derartiger Fahrzeugluftreifen ist beispielsweise aus der US 2014/0166173 A1 bekannt. Der Fahrzeugluftreifen weist einen Laufstreifen mit einer in Umfangsrichtung umlaufenden Profilrippe auf, welche an jeder Seite von je einer Umfangsrille begrenzt ist. Im Inneren der Proilrippe befindet sich ein von der Rippenaußenfläche beabstandetes, in Umfangsrichtung umlaufendes Insert, welches nach entsprechendem Abrieb der Profilrippe entfernt wird, wodruch eine weitere Rille gebildet wird. Die Profilrippe ist ferner mit in Draufsicht in axialer Richtung verlaufenden Einschnitten mit einer Breite von 0,6 mm versehen. Gemäß einer Variante ist der Einschnitt, in Draufsicht betrachtet, aus einem Einschnitthauptabschnitt und zwei Einschnittrandabschnitten zusammengesetzt, wobei der Einschnitthauptabschnitt eine Tiefe von etwa 50% der Profiltiefe und jeder Einschnittrandabschnitt eine Tiefe von etwa 100% der Profiltiefe aufweist, sodass die Tiefe jedes Einschnittrandabschnittes 200% der Tiefe des Einschnitthauptabschnittes beträgt. Die Einschnittrandabschnitte münden jeweils in einen Hohlraum mit einem kreisförmigen Querschnitt ein, wodruch in diesem Bereich Spannungsspitzen vermieden werden. Der Reifen soll einen guten Nassgriff aufweisen, wobei eine hohe Profilsteifigkeit erhalten bleiben soll.

Die US 2011/0108176 A1 offenbart einen Fahrzeugluftreifen mit einem Laufstreifen mit Profilrippen, welche mit in Draufsicht in axialer Richtung verlaufenden, durchquerenden Einschnitten mit einer Breite von 0,5 mm bis 1,5 mm versehen sind. Gemäß einer Ausführung setzt sich jeder Einschnitt aus einem seichter ausgeführten Einschnittabschnitt und einem in einen Hohlraum einmündenden, tiefer ausgeführten Einschnittabschnitt zusammen, wobei der Hohlraum breiter als der Einschnitt sowie im Querschnitt kreisförmig ausgeführt ist. Alternativ kann der Hohlraum, im Querschnitt betrachtet, beispielsweise ellipsenförmig sein. Der Hohlraum ist für die Rissbeständigkeit des angrenzenden Gummimaterials von Vorteil.

Die EP 3 415 343 A1 offenbart einen Fahrzeugluftreifen mit einem Laufstreifen mit von Umfangs- und Querrillen begrenzten Profilpositiven, welche mit durchquerenden Einschnitten versehen sind, die über ihre gesamte Erstreckung jeweils in einen kanalförmigen Hohlraum mit trichterförmigen Endabschnitten einmünden. Die Endabschnitte sollen für geringe Spannungen an den Enden der Einschnitte sorgen, was im Hinblick auf die Haltbarkeit des Laufstreifens günstig ist.

Aus der US 2012/0234443 A1 ist ein Fahrzeugluftreifen mit einem Laufstreifen mit Profilpositiven mit durchquerenden Einschnitten, die jeweils in einen Kanal einmünden, bekannt. Die Kanäle weisen einen sich zu ihren Enden vergrößernden Durchmesser auf.

Aus der US 2019/0084352 A1 ist ein weiterer Fahrzeugluftreifen mit einem Laufstreifen mit einer Profilrippe, welche mit durchquerenden Einschnitten versehen ist, bekannt. Die Einschnitte weisen jeweils einen seichter ausgeführten Einschnitthauptabschnitt und zwei tiefer ausgeführte Einschnittrandabschnitte auf, wobei die Tiefe des Einschnitthauptabschnittes 40% bis 55% der Tiefe der Einschnittrandabschnitte beträgt.

Die US 2017/0253090 A1 offenbart einen Fahrzeugluftreifen mit einem Laufstreifen mit einer Profilrippe mit durchquerenden Einschnitten, welche sich, in Draufsicht betrachtet, aus einem gerade verlaufenden, seichter ausgeführten Hauptabschnitt und einem bogenförmig verlaufenden, tiefer ausgeführten Einschnittrandabschnitt zusammensetzen.

Ferner ist aus der WO 2015/128106 A1 ein Fahrzeugluftreifen, welcher ein Reifen für Personenkraftwagen, Vans oder Schwerlastfahrzeuge (Nutzfahrzeuge) sein kann, bekannt. Gemäß einem Ausführungsbeispiel weist der Reifen einen Laufstreifen mit Profilrippen auf, welche durch Umfangsrillen voneinander getrennt und durch Querrillen in Profilblöcke gegliedert sind, wobei in den Profilrippen in axialer Richtung verlaufende Einschnitte mit einer Breite von 0,4 mm bis 0,6 mm ausgebildet sind. Die Einschnitte setzen sich, in Draufsicht betrachtet, jeweils aus einem über mindestens 50% der Einschnittlänge, beim Ausführungsbeispiel über den Großteil der Erstreckung des Einschnittes, verlaufenden Einschnitthauptabschnitt und zwei in die Umfangsrillen einmündenden Einschnittrandabschnitten zusammen. Der Einschnitthauptabschnitt weist eine Tiefe von mindestens 70% der Profiltiefe und die Einschnittrandabschnitte weisen eine Tiefe von 30% bis 70% der Tiefe des Einschnitthauptabschnittes auf. An zumindest einer Einschnittwand ist eine Vertiefung ausgebildet, welche sich radial innerhalb einer Tiefe von 50% der Profiltiefe befindet, randseitig von mindestens 2 mm Einschnittwand umlaufen ist und das Wasseraufnahmevermögen des Einschnittes erhöht.

Es ist hinlänglich bekannt, Profilrippen von Laufstreifen mit Einschnitten zu versehen, um die Griffeigenschaften zu verbessern. Darüber hinaus tragen Einschnitte zur Entwässerung des Laufstreifenprofils bei, wobei deren Wasseraufnahmevermögen mit zunehmenden Laufstreifenabrieb abnimmt, wodurch die Nassgriffeigenschaften nachlassen. Ungewünschter Weise verringern die Einschnitte gleichzeitig die Steifigkeit der Profilrippen, wodurch die Übertragung von Traktionskraft auf den Untergrund beeinträchtigt wird.

Der Erfindung liegt die Aufgabe zugrunde, bei einem Fahrzeugluftreifen der eingangs genannten Art über den gesamten Laufstreifenabrieb gute Nassgriffeigenschaften unter Beibehaltung einer im Hinblick auf die Traktionskraftübertragung günstigeren Profilsteifigkeit zu ermöglichen.

Gelöst wird die gestellte Aufgabe erfindungsgemäß dadurch, dass der Einschnitthauptabschnitt eine entlang der Mittellinie des Einschnittes ermittelte Länge von 65% bis 90% der auf übereinstimmende Weise ermittelten Länge des Einschnittes aufweist, wobei die Tiefe des Einschnitthauptabschnittes 10% bis 30% der Profiltiefe beträgt und wobei der Hohlraum, im Querschnitt des Einschnittes betrachtet, in radialer Richtung langgestreckt ist und in radialer Richtung eine Länge von 25% bis 45% der Profiltiefe aufweist.

Bei neuem bzw. wenig abgefahrenen Laufstreifen sorgen die Einschnitte, insbesondere auch wegen ihrer Fähigkeit sich beim Durchlaufen des Footprints deutlich zu öffnen, für eine gute Entwässerung der Profilrippen, sodass die Einschnittkanten auf nassem Untergrund ihre Wirkung als Griffkanten optimal entfalten können. Durch den seichter ausgeführten Einschnitthauptabschnitt ist - im Vergleich zu Laufstreifenprofilen mit Einschnitten mit tiefer ausgeführten Einschnitthauptabschnitten - über die gesamte Lebensdauer des Reifens (Laufstreifenabrieb) eine für die Traktionskraftübertragung vorteilhaft hohe Steifigkeit der Profilrippe gewährleistet. Mit fortschreitendem Laufstreifenabrieb treten die Hohlräume an die Laufstreifenperipherie, welche bedingt durch ihre im Vergleich zu den Einschnitten breitere Ausführung bei den durch den Laufstreifenabrieb steifer gewordenen Profilrippen weiterhin ein gute Wasseraufnahme ermöglichen, wobei das aufgenommene Wasser vorteilhafterweise unmittelbar in die Umfangsrille(n) abgeleitet wird. Dadurch ist die Wirkung der an der Laufstreifenperipherie liegenden, durch die Hohlräume bedingten Kanten als Griffkanten besonders ausgeprägt. Der langgestreckte Hohlraum hat sich im Hinblick auf die Wasseraufnahme und Wasserableitung zur Umfangsrille als besonders günstig erwiesen.

Gemäß einer bevorzugten Ausführung weist der Hohlraum, im Querschnitt des Einschnittes betrachtet, an seiner breitesten Stelle eine Breite von 200% bis 500%, insbesondere von 300% bis 400%, bevorzugt von 330% bis 370%, der Breite des Einschnittes auf. Dies trägt beim Fahren auf nasser Fahrbahn zu einer guten Wasseraufnahme bei, wodurch die Nassgriffeigenschaften weiter verbessert sind.

Ferner ist es von Vorteil, wenn die Länge des Hohlraums 30% bis 40%, bevorzugt 33% bis 37%, der Profiltiefe beträgt.

Gemäß einer weiteren bevorzugten Ausführung reicht der Hohlraum in radialer Richtung bis in eine Tiefe von 75% bis 100%, insbesondere von bis zu 95%, der Profiltiefe. Dies trägt zur Aufrechterhaltung guter Nassgriffeigenschaften über den Laufstreifenabrieb bei.

Für die Traktionskraftübertragung ist es ferner von Vorteil, wenn die Tiefe des Einschnitthauptabschnittes bis zu 25%, insbesondere bis zu 20%, der Profiltiefe beträgt.

Ein im Hinblick auf die Nassgriffeigenschaften und die für die Traktionskraftübertragung relevante Profilsteifigkeit besonders vorteilhafter Kompromiss lässt sich dadurch erzielen, dass die Tiefe des Einschnittrandabschnittes 250% bis 350%, insbesondere 290% bis 310%, der Tiefe des Einschnitthauptabschnittes beträgt.

Gemäß einer weiteren bevorzugten Ausführung verläuft der Einschnittrandabschnitt, im Querschnitt des Einschnittes betrachtet, in Form einer Welle, insbesondere in Form einer harmonischen Welle, besonders bevorzugt in Form einer harmonischen Zick-Zack-Welle oder einer harmonischen Sägezahn-Welle. Dies ermöglicht im Hinblick auf die Profilsteifigkeit günstige Abstützungseffekte der durch den Einschnitt gebildeten Profilrippensegmente, insbesondere bei neuem bzw. wenig abgefahrenem Reifen.

Eine weitere bevorzugte Ausführung ist dadurch gekennzeichnet, dass der Einschnitt in Draufsicht - bezogen auf seine Mittellinie - gerade ausgeführt ist und der Einschnittrandabschnitt, in Draufsicht betrachtet, gerade verläuft. Dies ist vor allem im Hinblick auf die Öffnungsfähigkeit des Einschnittes und daher für die Wasseraufnahme von Vorteil, trägt daher zu einer Verbesserung der Nassgriffeigenschaften bei.

Gemäß einer weiteren bevorzugten Ausführung verläuft der Einschnitthauptabschnitt, in Draufsicht betrachtet, zumindest über den Großteil seiner Erstreckung, insbesondere über zumindest 70% seiner entlang der Mittellinie des Einschnittes ermittelten Länge, in Form einer Welle, insbesondere in Form einer harmonischen Welle, besonders bevorzugt in Form einer harmonischen Zick-Zack-Welle oder einer harmonischen Sägezahn-Welle. Diese Maßnahme trägt insbesondere zu einer weiteren Erhöhung der Quersteifigkeit der Profilrippe bei.

Bei dieser Ausführung ist es ferner günstig, wenn die Wellenlänge der Welle des Einschnitthauptabschnittes 25% bis 40%, insbesondere bis zu 33%, der entlang der Mittellinie des Einschnittes ermittelte Länge beträgt.

Darüber hinaus ist es bei dieser Ausführung günstig, wenn die Amplitude der Welle des Einschnitthauptabschnittes 75% bis 200%, insbesondere 125% bis 175%, der Breite des Einschnittes beträgt.

Für die Steifigkeit der Profilrippe es ferner günstig, wenn im Einschnitthauptabschnitt der im Querschnitt des Einschnittes im Einschnittrandabschnitt vorliegende Verlauf der Welle fortgeführt ist.

Gemäß einer weiteren bevorzugten Ausführung beträgt die Länge des Einschnitthauptabschnittes bis zu 85% der Länge des Einschnittes. Der seichter ausgeführte Einschnitthauptabschnitt erstreckt sich bei dieser Ausführung daher über den Großteil des Einschnittes, was im Hinblick auf die Profilsteifigkeit günstig ist.

Eine weitere bevorzugte Ausführung ist dadurch gekennzeichnet, dass der Hohlraum eine in radialer Richtung verlaufende Symmetrieebene aufweist, welche die in Draufsicht in Erstreckungsrichtung des Einschnittes ausgerichtete Mittellinie des Einschnittes enthält.

Eine weitere bevorzugte Ausführung betrifft einen Fahrzeugluftreifen mit einem Laufstreifen mit zumindest einer Profilrippe, welche an jeder Seite von je einer auf Profiltiefe ausgeführten Umfangsrille begrenzt ist, wobei die Einschnitte jeweils aus dem Einschnitthauptabschnitt und zwei Einschnittrandabschnitten gebildet sind, wobei die Einschnittrandabschnitte jeweils in einen von der jeweiligen Umfangsrille ausgehenden, gegenüber dem Einschnitt breiter ausgeführten Hohlraum einmünden. Das Vorsehen solcher speziell ausgestalteten Einschnitte in mittleren Profilrippen ist besonders günstig, weil bei solchen die beschriebenen Effekte in verstärktem Ausmaß auftreten.

Weitere Merkmale, Vorteile und Einzelheiten der Erfindung werden nun anhand der Zeichnung, die schematisch Ausführungsbeispiele der Erfindung zeigt, näher erläutert. Dabei zeigen
Fig. 1 eine vereinfachte Draufsicht auf einen Profilblock eines Laufstreifens eines Nutzfahrzeugreifens mit einer ersten Ausführungsvariante der Erfindung,
Fig. 2 eine vergrößerte Schrägansicht einer Visualisierung eines im Profilblock ausgebildeten Einschnittes,
Fig. 3 eine Frontansicht der Einschnitt-Visualisierung aus Fig. 2,
Fig. 4 eine vereinfachte Draufsicht auf die Einschnitt-Visualisierung aus Fig. 2,
Fig. 5 einen Schnitt entlang der Linie V-V aus Fig. 3 und Fig. 4,
Fig. 6 einen Schnitt entlang der Linie VI-VI aus Fig. 3 und Fig. 4,
Fig. 7a bis Fig. 7c Schnitte durch einen Teilbereich eines Einschnittes mit weiteren Ausführungsvarianten und
Fig. 7d einen Schnitt durch einen Teilbereich eines Einschnittes mit einer weiteren Ausführungsvariante, welche nicht unter den Schutzbereich des Anspruchs 1 fällt.

Gemäß der Erfindung ausgeführte Fahrzeugluftreifen sind Reifen für Kraftfahrzeuge, insbesondere für mehrspurige Kraftfahrzeuge, sowie vorzugsweise Nutzfahrzeugreifen in Radialbauart, insbesondere für LKWs oder Busse.

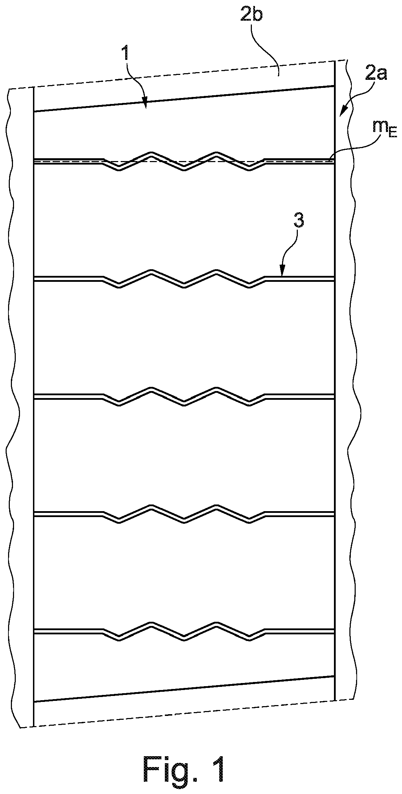

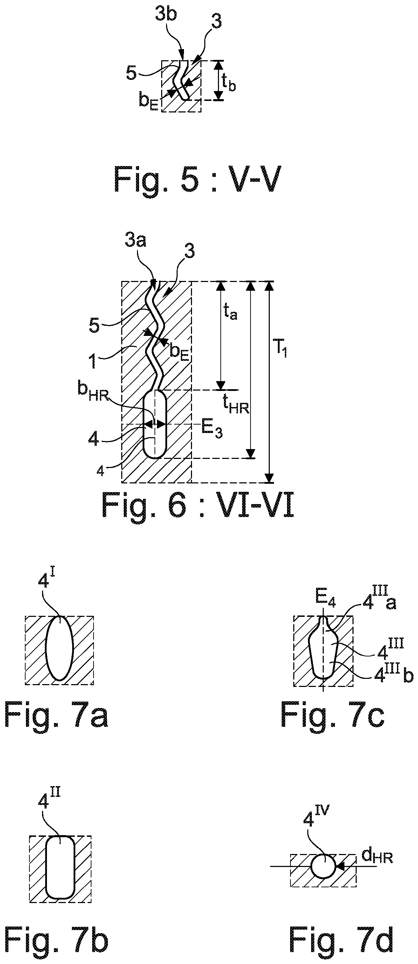

In Fig. 1 ist von einem Laufstreifen eines Nutzfahrzeugreifens ein im mittleren Laufstreifenbereich ausgebildeter, in Umfangsrichtung langgestreckter Profilblock 1 gezeigt, welcher Bestandteil einer in Umfangsrichtung umlaufenden Profilrippe, die als Blockreihe ausgeführt ist, ist. Der Profilblock 1 ist seitlich durch beim gezeigten Ausführungsbeispiel in Draufsicht gerade verlaufende Umfangsrillen 2a begrenzt. In den Umfangsrichtungen ist der Profilblock 1 durch Querrillen 2b begrenzt, an welche vorzugsweise weitere zur Profilrippe gehörende Profilblöcke 1 anschließen. Die Umfangsrillen 2 sind in radialer Richtung in der jeweils vorgesehenen Profiltiefe T₁ (angedeutet in Fig. 6) ausgeführt, welche für Nutzfahrzeugreifen bevorzugt 10,0 mm bis 25,0 mm beträgt.

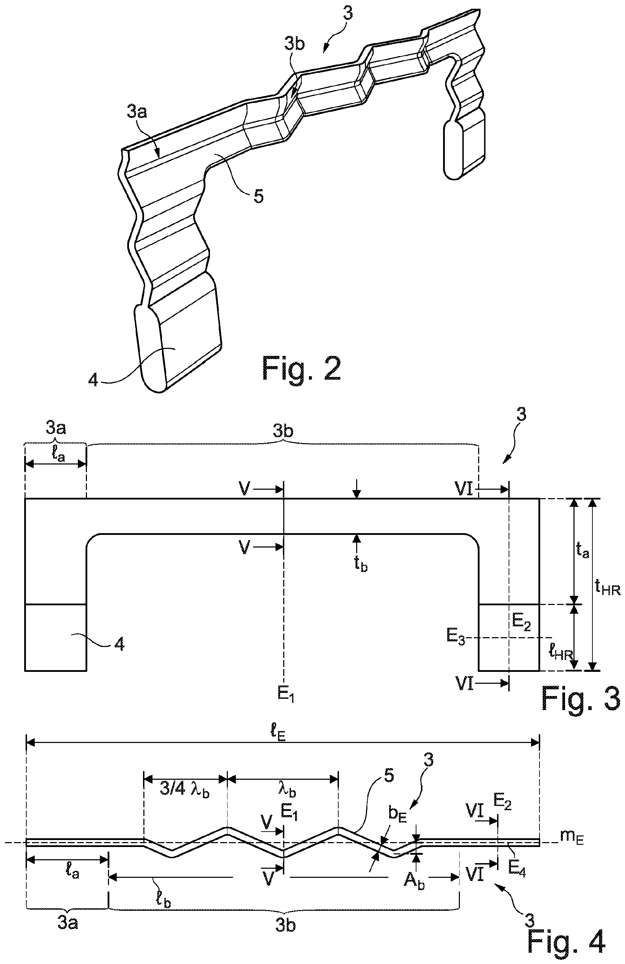

Der Profilblock 1 ist über seinen Umfang mit einer Vielzahl von Einschnitten 3 versehen, welche den Profilblock 1 durchqueren und - bezogen auf in Erstreckungsrichtung der Einschnitte 3 ausgerichtete Mittellinien m_{E} - in Draufsicht parallel zueinander sowie beim Ausführungsbeispiel in axialer Richtung verlaufen. Die weitere Ausgestaltung der Einschnitte 3 wird nachfolgend anhand des in Fig. 2 bis Fig. 6 gezeigten Einschnittes 3 erläutert.

Der Einschnitt 3 weist eine die Mittellinie m_{E} halbierende, von der Umfangsrichtung und der radialen Richtung aufgespannte Symmetrieebene E₁ auf (Fig. 3, Fig. 4). Wie Fig. 2 bis Fig. 4 insbesondere in Kombination miteinander zeigen, setzt sich der Einschnitt 3, in Draufsicht betrachtet, aus zwei Einschnittrandabschnitten 3a und einem über den Großteil seiner Erstreckung verlaufenden Einschnitthauptabschnitt 3b zusammen, wobei die Einschnittrandabschnitte 3a im Inneren des Profilblockes 1 über ihre gesamte Erstreckung jeweils in einen von der entsprechenden Umfangsrille 2 ausgehenden Hohlraum 4 einmünden (Fig. 1 iVm Fig. 2 und Fig. 6).

Der Einschnitt 3 weist zwei korrespondierend ausgeführte Einschnittwände 5 (Fig. 2, Fig. 4 bis Fig. 6), eine zwischen den Einschnittwänden 5 ermittelte konstante Breite b_{E} (Fig. 4 bis Fig. 6) von 0,4 mm bis 3,0 mm, insbesondere von bis zu 2,0 mm, sowie eine entlang der Mittellinie m_{E} ermittelte Länge l_{E} (Fig. 4) auf.

Die Einschnittrandabschnitte 3a verlaufen, in Draufsicht betrachtet (Fig. 4), gerade sowie miteinander fluchtend, weisen eine an der Laufstreifenperipherie entlang der Mittellinie m_{E} ermittelte, über ihre radiale Erstreckung insbesondere konstante Länge lₐ (Fig. 4) und in radialer Richtung jeweils eine Tiefe tₐ (Fig. 3, Fig. 6) auf. Die Einschnittrandabschnitte 3a verlaufen ferner, im Querschnitt senkrecht zur Mittellinie m_{E} betrachtet (Fig. 6), zick-zack-förmig ins radial Innere des Profilblockes 1 hinein (Fig. 2, Fig. 6) und münden über ihre gesamte Länge lₐ in der Tiefe tₐ in die bereits erwähnten Hohlräume 4 (Fig. 2, Fig. 3). Die Einschnittwände 5 weisen daher in den Einschnittrandabschnitten 3a, im Querschnitt senkrecht zur Mittellinie m_{E} betrachtet, in radialer Richtung einen entsprechend zick-zackförmigen Verlauf auf (Fig. 6).

Gemäß Fig. 4 weist der Einschnitthauptabschnitt 3b eine an der Laufstreifenperipherie entlang der Mittellinie m_{E} ermittelte, über seine radiale Erstreckung insbesondere konstante Länge l_{b} von 65% bis 90%, insbesondere von bis zu 85%, der Länge l_{E} des Einschnittes 3 auf und ist, in Draufsicht betrachtet, zumindest über den Großteil seiner Länge l_{b}, insbesondere über zumindest 70% seiner Länge l_{b}, in Form einer harmonischen Zick-Zack-Welle mit einer Wellenlänge λ_{b} und einer Amplitude A_{b} ausgeführt, wobei er beim gezeigten Ausführungsbeispiel über 2,5 Wellenlänge λ_{b} - d.h. über je 1,25 Wellenlänge λ_{b} an jeder Seite der Symmetrieebene E₁ - verläuft. Die Wellenlänge λ_{b} beträgt 25% bis 40%, insbesondere bis zu 33%, der Länge l_{b}, die Amplitude A_{b} beträgt 75% bis 200%, insbesondere 125% bis 175%, der Breite b_{E} des Einschnittes 3. Ferner weist der Einschnitthauptabschnitt 3b in radialer Richtung eine konstante Tiefe t_{b} (Fig. 3, Fig. 5) von 10% bis 30%, insbesondere von bis zu 25%, bevorzugt von bis zu 20%, der Profiltiefe T₁ (Fig. 6) auf, wobei beim Ausführungsbeispiel der bereits erwähnte, in den Einschnittrandabschnitten 3a in radialer Richtung ausgebildete zick-zack-förmige Verlauf der Einschnittwände 5 im Einschnitthauptabschnitt 3b fortgeführt ist (Fig. 2, Fig. 5). Beim gezeigten Ausführungsbeispiel ist die Tiefe t_{b} des Einschnitthauptabschnittes 3b derart gewählt, dass der Einschnitthauptabschnitt 3b, im Querschnitt senkrecht zur Mittellinie m_{E} betrachtet, über einen einzigen Zacken verläuft und daher liegend V-förmig ausgeführt ist (Fig. 5).

Wie Fig. 3, Fig. 4 und Fig. 6 in Kombination zeigen, weisen die bereits erwähnten Hohlräume 4 jeweils eine in radialer Richtung und senkrecht zur Mittellinie m_{E} verlaufende Symmetrieebene E₂ (Fig. 3, Fig. 4), eine orthogonal (senkrecht) zur Symmetrieebene E₂ und parallel zur Laufstreifenperipherie verlaufende Symmetrieebene E₃ (Fig. 3, Fig. 6) und eine orthogonal (senkrecht) zur Symmetrieebene E₂ verlaufende, die Mittellinie m_{E} enthaltende Symmetrieebene E₄ (Fig. 4, Fig. 6) auf. Die Hohlräume 4 reichen gegenüber der Laufstreifenperipherie in radialer Richtung bis in eine Tiefe t_{HR} (Fig. 3, Fig. 6) von 75% bis 100%, insbesondere von bis zu 95%, der Profiltiefe T₁, sind in radialer Richtung langgestreckt, weisen in der Symmetrieebene E₂ in radialer Richtung eine Länge l_{HR} (Fig. 3) von 25% bis 45%, insbesondere von 30% bis 40%, bevorzugt von 33% bis 37%, der Profiltiefe T₁ (Fig. 6) und in der Symmetrieebene E₃ eine senkrecht zur Symmetrieebene E₄ ermittelte Breite b_{HR} (Fig. 6) von 200% bis 500%, insbesondere von 300% bis 400%, bevorzugt von 330% bis 370%, der Breite b_{E} (Fig. 6) des Einschnittes 3 auf. Wie Fig. 6 zeigt, sind die Hohlräume 4, im Querschnitt senkrecht zur Mittellinie m_{E} betrachtet, in Form von Rechtecken ausgeführt, welche anstelle der kurzen Seiten Halbkreise aufweisen. Gemäß Fig. 3 sind die Hohlräume 4 ferner derart ausgeführt, dass diese nicht über die Einschnittrandabschnitte 3a hinausragen, d.h. nicht bis in den Bereich radial innerhalb des Einschnitthauptabschnittes 3b hineinragen. Bevorzugter Weise sind die Tiefe t_{HR}, die Länge l_{HR} und die Tiefe tₐ derart aufeinander abgestimmt, dass die Tiefe tₐ der Einschnittrandabschnitte 3a (Fig. 3, Fig. 6) 200% bis 400%, insbesondere 250% bis 350%, besonders bevorzugt 290% bis 310%, der Tiefe t_{b} des Einschnitthauptabschnittes 3b beträgt.

Fig. 7a bis Fig. 7d zeigen Querschnitte durch Hohlräume 4^{I} bis 4^{IV}, welche Varianten der Hohlraumes 4 sind. Die bereits erwähnte Tiefe tₐ der Einschnittrandabschnitte 3a ist derart an die Ausgestaltung der Hohlräume 4^{I} bis 4^{IV} angepasst, dass die Hohlräume 4^{I} bis 4^{IV} bis in die bereits erwähnte Tiefe t_{HR} (Fig. 3) von 75% bis 100%, insbesondere von bis zu 95%, der Profiltiefe T₁ reichen.

Der Hohlraum 4^{I} (Fig. 7a) unterscheidet sich vom Hohlraum 4 dadurch, dass er, im Querschnitt senkrecht zur Mittellinie m_{E} betrachtet, in Form eines Ovals ausgeführt ist.

Der Hohlraum 4^{II} (Fig. 7b) unterscheidet sich vom Hohlraum 4 dadurch, dass er, im Querschnitt senkrecht zur Mittellinie m_{E} betrachtet, in Form eines Rechteckes mit beispielsweise entlang von Viertelkreisen abgerundeten Ecken ausgeführt ist.

Der Hohlraum 4^{III} (Fig. 7c) ist ausschließlich bezüglich der erwähnten Symmetrieebenen E₂ und E₄ symmetrisch, ist, im Querschnitt senkrecht zur Mittellinie m_{E} betrachtet, tropfenförmig und setzt sich aus einem radial äußeren Raumteil 4^{III}a und einem radial inneren Raumteil 4^{III}b zusammen, wobei der radial innere Raumteil 4^{III}b ein größeres Volumen aufweist als der radial äußere Raumteil 4^{III}a. Der radial innere Raumteil 4^{III}b ist, im Querschnitt senkrecht zur Mittellinie m_{E} betrachtet, im Wesentlichen in Form eines in radialer Richtung langgestreckten gleichschenkeligen Trapezes ausgeführt, wobei die Basis des Trapezes (längere Grundseite) an den radial äußeren Raumteil 4^{III}a angrenzt. Der radial äußere Raumteil 4^{III}a ist, im Querschnitt senkrecht zur Mittellinie m_{E} betrachtet, gleichschenkelig-dreieckförmig ausgeführt, wobei die Dreieckschenkel zueinander konkav gekrümmt, d.h. nach innen gekrümmt, sind. Ferner sind sämtliche Eckbereiche des Hohlraumes 4^{III} verrundet ausgeführt.

Der Hohlraum 4^{IV} (Fig. 7d) weist einen kreisrunden Querschnitt mit einem Durchmesser d_{HR} von 200% bis 500%, insbesondere von 300% bis 400%, bevorzugt von 330% bis 370%, der Breite b_{E} (Fig. 4 bis Fig. 6) des Einschnittes 3 auf.

Die Erfindung ist auf die beschriebenen Ausführungsbeispiele nicht beschränkt.

Der Laufstreifen des Reifens weist zumindest eine in Umfangsrichtung umlaufende Profilrippe mit den durchquerenden Einschnitten auf, wobei die Profilrippe gegebenenfalls mit durchquerenden Querrillen in Profilblöcke und/oder mit sacknutartig endenden Querrillen blockartig strukturiert ist. Die Profilrippe ist zumindest einseitig von einer in Draufsicht beliebig, beispielsweise zick-zack-förmig, verlaufenden Umfangsrille begrenzt, in welche die Einschnitte über je einen Einschnittrandabschnitt einmünden. Zu solchen Profilrippen gehören insbesondere schulterseitige Profilrippen, in welchen durchquerende Einschnitte zumindest bis zum entsprechenden seitlichen Rand der Bodenaufstandsfläche (statisch ermittelter Footprint, ermittelt mit einem auf einer Normfelge montierten Reifen, Last bei 70 % der maximalen Tragfähigkeit, Innendruck 85 % des Normdruckes, gemäß ETRTO-Standards) reichen. Die Einschnitte können in Draufsicht - bezogen auf ihre Mittellinien - zur axialen Richtung unter einem Winkel von 0° bis 50° verlaufen. Ferner können die Einschnitte in Draufsicht beliebig verlaufen, beispielsweise gerade oder insgesamt bzw. abschnittsweise bogen- oder wellenförmig. Bei zumindest abschnittsweise bogenförmig verlaufenden Einschnitten folgen die Mittellinien dem bogenförmigen Verlauf, wobei der Winkel, unter welchem solche Einschnitte zur axialen Richtung verlaufen, bezüglich einer die Enden der Mittellinie verbindenden, in Draufsicht gerade verlaufenden Linie ermittelt ist.

### Bezugsziffernliste

- 1: Profilblock
- 2a: Umfangsrille
- 2b: Querrille
- 3: Einschnitt
- 3a: Einschnittrandabschnitt
- 3b: Einschnitthauptabschnitt
- 4, 4^{I} bis 4^{IV}: Hohlraum
- 4‴a: radial äußerer Raumteil
- 4‴b: radial innerer Raumteil
- 5: Einschnittwand
- A_{b}: Amplitude
- b_{E}, b_{HR}: Breite
- d_{HR}: Durchmesser
- E₁, E₂, E₃, E₄: Symmetrieebene
- lₐ, l_{b}, l_{E}, l_{HR}: Länge
- m_{E}: Mittellinie
- tₐ, t_{b}, t_{HR}: Tiefe
- T₁: Profiltiefe
- λ_{b}: Wellenlänge

## Patentansprüche

1. Fahrzeugluftreifen, insbesondere Nutzfahrzeugreifen, mit einem Laufstreifen mit zumindest einer in Umfangsrichtung umlaufenden Profilrippe (1), welche an zumindest einer Seite von einer auf Profiltiefe (T₁) ausgeführten Umfangsrille (2a) begrenzt und welche von in Draufsicht zumindest in Gruppen parallel zueinander sowie zur axialen Richtung unter einem Winkel von 0° bis 50° verlaufenden, eine Breite (b_{E}) von 0,4 mm bis 3,0 mm aufweisenden Einschnitten (3) durchquert ist, wobei jeder Einschnitt (3) einen Einschnitthauptabschnitt (3b) aufweist und in jede die Profilrippe (1) begrenzende Umfangsrille (2a) mit jeweils einem Einschnittrandabschnitt (3a) einmündet, wobei der Einschnitthauptabschnitt (3b) und der Einschnittrandabschnitt (3a) in radialer Richtung jeweils eine Tiefe (tₐ, t_{b}) aufweisen, wobei die Tiefe (t_{b}) des Einschnitthauptabschnittes (3b) geringer ist als die Tiefe (tₐ) des Einschnittrandabschnittes (3a) und die Tiefe (tₐ) des Einschnittrandabschnittes (3a) 200% bis 400% der Tiefe (t_{b}) des Einschnitthauptabschnittes (3b) beträgt, wobei der Einschnittrandabschnitt (3a) im Inneren der Profilrippe (1) über seine gesamte Erstreckung in einen von der Umfangsrille (2) ausgehenden, gegenüber dem Einschnitt (3) breiter ausgeführten Hohlraum (4, 4^{I} bis 4^{III}) einmündet,
**dadurch gekennzeichnet,**
**dass** der Einschnitthauptabschnitt (3b) eine entlang der Mittellinie (m_{E}) des Einschnittes (3) ermittelte Länge (l_{b}) von 65% bis 90% der auf übereinstimmende Weise ermittelten Länge (l_{E}) des Einschnittes (3) aufweist, wobei die Tiefe (t_{b}) des Einschnitthauptabschnittes (3b) 10% bis 30% der Profiltiefe (T₁) beträgt und wobei der Hohlraum (4, 4^{I} bis 4^{III}), im Querschnitt des Einschnittes (3) betrachtet, in radialer Richtung langgestreckt ist und in radialer Richtung eine Länge (l_{HR}) von 25% bis 45% der Profiltiefe (T₁) aufweist.

2. Fahrzeugluftreifen nach Anspruch 1, **dadurch gekennzeichnet, dass** der Hohlraum (4, 4^{I} bis 4^{III}), im Querschnitt des Einschnittes (3) betrachtet, an seiner breitesten Stelle eine Breite (b_{HR}) von 200% bis 500%, insbesondere von 300% bis 400%, bevorzugt von 330% bis 370%, der Breite (b_{E}) des Einschnittes (3) aufweist.

3. Fahrzeugluftreifen nach Anspruch 1 oder 2, **dadurch gekennzeichnet, dass** die Länge (l_{HR}) des Hohlraums (4, 4^{I} bis 4^{III}) 30% bis 40%, bevorzugt 33% bis 37%, der Profiltiefe (T₁) beträgt.

4. Fahrzeugluftreifen nach einem der Ansprüche 1 bis 3, **dadurch gekennzeichnet, dass** der Hohlraum (4, 4^{I} bis 4^{III}) in radialer Richtung bis in eine Tiefe (t_{HR}) von 75% bis 100%, insbesondere von bis zu 95%, der Profiltiefe (T₁) reicht.

5. Fahrzeugluftreifen nach einem der Ansprüche 1 bis 4, **dadurch gekennzeichnet, dass** die Tiefe (t_{b}) des Einschnitthauptabschnittes (3b) bis zu 25%, insbesondere bis zu 20%, der Profiltiefe (T₁) beträgt.

6. Fahrzeugluftreifen nach einem der Ansprüche 1 bis 5, **dadurch gekennzeichnet, dass** die Tiefe (tₐ) des Einschnittrandabschnittes (3a) 250% bis 350%, insbesondere 290% bis 310%, der Tiefe (t_{b}) des Einschnitthauptabschnittes (3b) beträgt.

7. Fahrzeugluftreifen nach einem der Ansprüche 1 bis 6, **dadurch gekennzeichnet, dass** der Einschnittrandabschnitt (3a), im Querschnitt des Einschnittes (3) betrachtet, in Form einer Welle, insbesondere in Form einer harmonischen Welle, besonders bevorzugt in Form einer harmonischen Zick-Zack-Welle oder einer harmonischen Sägezahn-Welle, verläuft.

8. Fahrzeugluftreifen nach einem der Ansprüche 1 bis 7, **dadurch gekennzeichnet, dass** der Einschnitt (3) in Draufsicht - bezogen auf seine Mittellinie (m_{E} ) - gerade ausgeführt ist und der Einschnittrandabschnitt (3a), in Draufsicht betrachtet, gerade verläuft.

9. Fahrzeugluftreifen nach einem der Ansprüche 1 bis 8, **dadurch gekennzeichnet, dass** der Einschnitthauptabschnitt (3b), in Draufsicht betrachtet, zumindest über den Großteil seiner Erstreckung, insbesondere über zumindest 70% seiner entlang der Mittellinie (m_{E}) des Einschnittes (3) ermittelten Länge (l_{b}), in Form einer Welle, insbesondere in Form einer harmonischen Welle, besonders bevorzugt in Form einer harmonischen Zick-Zack-Welle oder einer harmonischen Sägezahn-Welle, verläuft.

10. Fahrzeugluftreifen nach Anspruch 9, **dadurch gekennzeichnet, dass** die Wellenlänge (λ_{b}) der Welle des Einschnitthauptabschnittes (3a) 25% bis 40%, insbesondere bis zu 33%, der entlang der Mittellinie (m_{E}) des Einschnittes (3) ermittelten Länge (l_{b}) beträgt.

11. Fahrzeugluftreifen nach Anspruch 9 oder 10, **dadurch gekennzeichnet, dass** die Amplitude (A_{b}) der Welle des Einschnitthauptabschnittes (3a) 75% bis 200%, insbesondere 125% bis 175%, der Breite (b_{E}) des Einschnittes (3) beträgt.

12. Fahrzeugluftreifen nach einem der Ansprüche 7 bis 11, **dadurch gekennzeichnet, dass** im Einschnitthauptabschnitt (3b) der im Querschnitt des Einschnittes (3) im Einschnittrandabschnitt (3a) vorliegende Verlauf der Welle fortgeführt ist.

13. Fahrzeugluftreifen nach einem der Ansprüche 1 bis 12, **dadurch gekennzeichnet, dass** die Länge (l_{b}) des Einschnitthauptabschnittes (3b) bis zu 85% der Länge (l_{E}) des Einschnittes (3) beträgt.

14. Fahrzeugluftreifen nach einem der Ansprüche 1 bis 13, **dadurch gekennzeichnet, dass** der Hohlraum (4, 4^{I} bis 4^{III}) eine in radialer Richtung verlaufende Symmetrieebene (E₄) aufweist, welche die in Draufsicht in Erstreckungsrichtung des Einschnittes (3) ausgerichtete Mittellinie (m_{E}) des Einschnittes (3) enthält.

15. Fahrzeugluftreifen mit einem Laufstreifen mit zumindest einer Profilrippe (1), welche an jeder Seite von je einer auf Profiltiefe (T₁) ausgeführten Umfangsrille (2a) begrenzt ist, nach einem der Ansprüche 1 bis 14, **dadurch gekennzeichnet, dass** die Einschnitte (3) jeweils aus dem Einschnitthauptabschnitt (3b) und zwei Einschnittrandabschnitten (3a) gebildet sind, wobei die Einschnittrandabschnitte (3a) jeweils in einen von der jeweiligen Umfangsrille (2) ausgehenden, gegenüber dem Einschnitt (3) breiter ausgeführten Hohlraum (4, 4^{I} bis 4^{IV}) einmünden.

## Claims

1. Pneumatic vehicle tyre, in particular utility-vehicle tyre, having a tread with at least one profile rib (1) which runs around in a circumferential direction, is delimited on at least one side by a circumferential channel (2a) formed to a profile depth (T₁) and is traversed by sipes (3), said sipes, in plan view, at least in groups, extending parallel to one another and extending at an angle of 0° to 50° to the axial direction and having a width (b_{E}) of 0.4 mm to 3.0 mm, wherein each sipe (3) has a sipe main portion (3b) and opens out by way of a respective sipe edge portion (3a) into each circumferential channel (2a) that delimits the profile rib (1), wherein the sipe main portion (3b) and the sipe edge portion (3a) have respective depths (tₐ, t_{b}) in a radial direction, wherein the depth (t_{b}) of the sipe main portion (3b) is less than the depth (tₐ) of the sipe edge portion (3a) and the depth (tₐ) of the sipe edge portion (3a) is 200% to 400% of the depth (t_{b}) of the sipe main portion (3b), wherein, in the interior of the profile rib (1), the sipe edge portion (3a), over its entire extent, opens out into a cavity (4, 4^{I} to 4^{III}) which departs from the circumferential channel (2) and which is of wider form in comparison with the sipe (3),
**characterized**
**in that** the sipe main portion (3b) has a length (l_{b}), determined along the midline (m_{E}) of the sipe (3), of 65% to 90% of the length (l_{E}), determined in a corresponding manner, of the sipe (3), wherein the depth (t_{b}) of the sipe main portion (3b) is 10% to 30% of the profile depth (T₁), and wherein the cavity (4, 4^{I} to 4^{III}), as seen in a cross section of the sipe (3), is elongate in the radial direction and has in the radial direction a length (l_{HR}) of 25% to 45% of the profile depth (T₁).

2. Pneumatic vehicle tyre according to Claim 1, **characterized in that** the cavity (4, 4^{I} to 4^{III}), as seen in a cross section of the sipe (3), has at its widest position a width (b_{HR}) of 200% to 500%, in particular of 300% to 400%, preferably of 330% to 370%, of the width (b_{E}) of the sipe (3).

3. Pneumatic vehicle tyre according to Claim 1 or 2, **characterized in that** the length (l_{HR}) of the cavity (4, 4^{I} bis 4^{III}) is 30% to 40%, preferably 33% to 37%, of the profile depth (T₁).

4. Pneumatic vehicle tyre according to one of Claims 1 to 3, **characterized in that** the cavity (4, 4^{I} to 4^{III}), in the radial direction, reaches a depth (t_{HR}) of 75% to 100%, in particular of up to 95%, of the profile depth (T₁).

5. Pneumatic vehicle tyre according to one of Claims 1 to 4, **characterized in that** the depth (t_{b}) of the sipe main portion (3b) is up to 25%, in particular up to 20%, of the profile depth (T₁).

6. Pneumatic vehicle tyre according to one of Claims 1 to 5, **characterized in that** the depth (tₐ) of the sipe edge portion (3a) is 250% to 350%, in particular 290% to 310%, of the depth (t_{b}) of the sipe main portion (3b).

7. Pneumatic vehicle tyre according to one of Claims 1 to 6, **characterized in that** the sipe edge portion (3a), as seen in a cross section of the sipe (3), extends in the form of a wave, in particular in the form of a harmonic wave, particularly preferably in the form of a harmonic zigzag wave or a harmonic sawtooth wave.

8. Pneumatic vehicle tyre according to one of Claims 1 to 7, **characterized in that**, in plan view, the sipe (3) - based on its midline (m_{E}) - is of straight form, and, as seen in plan view, the sipe edge portion (3a) extends straight.

9. Pneumatic vehicle tyre according to one of Claims 1 to 8, **characterized in that**, as seen in plan view, the sipe main portion (3b), at least over the majority of its extent, in particular over at least 70% of its length (l_{b}), determined along the midline (m_{E}) of the sipe (3), extends in the form of a wave, in particular in the form of a harmonic wave, particularly preferably in the form of a harmonic zigzag wave or a harmonic sawtooth wave.

10. Pneumatic vehicle tyre according to Claim 9, **characterized in that** the wavelength (λ_{b}) of the wave of the sipe main portion (3a) is 25% to 40%, in particular up to 33%, of the length (l_{b}) determined along the midline (m_{E}) of the sipe (3).

11. Pneumatic vehicle tyre according to Claim 9 or 10, **characterized in that** the amplitude (A_{b}) of the wave of the sipe main portion (3a) is 75% to 200%, in particular 125% to 175%, of the width (b_{E}) of the sipe (3).

12. Pneumatic vehicle tyre according to one of Claims 7 to 11, **characterized in that** the profile of the wave that is present in the sipe edge portion (3a) in a cross section of the sipe (3) is continued in the sipe main portion (3b).

13. Pneumatic vehicle tyre according to one of Claims 1 to 12, **characterized in that** the length (l_{b}) of the sipe main portion (3b) is up to 85% of the length (l_{E}) of the sipe (3).

14. Pneumatic vehicle tyre according to one of Claims 1 to 13, **characterized in that** the cavity (4, 4^{I} to 4^{III}) has a radially extending plane of symmetry (E₄) which contains the midline (m_{E}) of the sipe (3), said midline being oriented in the direction of extent of the sipe (3) in plan view.

15. Pneumatic vehicle tyre having a tread with at least one profile rib (1), which is delimited on each side by a respective circumferential channel (2a) formed to a profile depth (T₁), according to one of Claims 1 to 14, **characterized in that** the sipes (3) are each formed of the sipe main portion (3b) and two sipe edge portions (3a), wherein the sipe edge portions (3a) each open out into a cavity (4, 4^{I} to 4^{IV}) which departs from the respective circumferential channel (2) and which is of wider form in comparison with the sipe (3).

## Revendications

1. Pneumatique de véhicule, notamment pneu de véhicule utilitaire, avec une bande de roulement avec au moins une nervure de profil (1) s'étendant dans la direction circonférentielle, qui est délimitée sur au moins un côté par une rainure circonférentielle (2a) réalisée à la profondeur de profil (T₁) et qui est traversée par des entailles (3) s'étendant, en vue de dessus, au moins en groupes parallèlement les unes aux autres ainsi que par rapport à la direction axiale selon un angle de 0° à 50°, présentant une largeur (b_{E}) de 0,4 mm à 3,0 mm, chaque entaille (3) présentant une section principale d'entaille (3b) et débouchant dans chaque rainure circonférentielle (2a) délimitant la nervure de profil (1) avec respectivement une section de bord d'entaille (3a), la section principale d'entaille (3b) et la section de bord d'entaille (3a) présentant chacune une profondeur (tₐ, t_{b}) dans la direction radiale, la profondeur (t_{b}) de la section principale d'entaille (3b) étant inférieure à la profondeur (tₐ) de la section de bord d'entaille (3a) et la profondeur (tₐ) de la section de bord d'entaille (3a) étant de 200 % à 400 % de la profondeur (t_{b}) de la section principale d'entaille (3b), la section de bord d'entaille (3a) débouchant à l'intérieur de la nervure de profil (1) sur toute son étendue dans un espace creux (4, 4^{I} à 4^{III}) partant de la rainure circonférentielle (2), réalisé plus large que l'entaille (3),
**caractérisé en ce que**
la section principale d'entaille (3b) présente une longueur (l_{b}), déterminée le long de la ligne centrale (m_{E}) de l'entaille (3), de 65 % à 90 % de la longueur (l_{E}) de l'entaille (3) déterminée de manière concordante, la profondeur (t_{b}) de la section principale d'entaille (3b) étant de 10 % à 30 % de la profondeur de profil (T₁), et l'espace creux (4, 4^{I} à 4^{III}), considéré en coupe transversale de l'entaille (3), étant allongé dans la direction radiale et présentant dans la direction radiale une longueur (l_{HR}) de 25 % à 45 % de la profondeur de profil (T₁).

2. Pneumatique de véhicule selon la revendication 1, **caractérisé en ce que** l'espace creux (4, 4^{I} à 4^{III}), considéré en coupe transversale de l'entaille (3), présente à son point le plus large une largeur (b_{HR}) de 200 % à 500 %, notamment de 300 % à 400 %, de préférence de 330 % à 370 %, de la largeur (b_{E}) de l'entaille (3).

3. Pneumatique de véhicule selon la revendication 1 ou 2, **caractérisé en ce que** la longueur (l_{HR}) de l'espace creux (4, 4^{I} à 4^{III}) est de 30 % à 40 %, de préférence de 33 % à 37 %, de la profondeur de profil (T₁).

4. Pneumatique de véhicule selon l'une quelconque des revendications 1 à 3, **caractérisé en ce que** l'espace creux (4, 4^{I} à 4^{III}) s'étend dans la direction radiale jusqu'à une profondeur (t_{HR}) de 75 % à 100 %, notamment jusqu'à 95 %, de la profondeur de profil (T₁).

5. Pneumatique de véhicule selon l'une quelconque des revendications 1 à 4, **caractérisé en ce que** la profondeur (t_{b}) de la section principale d'entaille (3b) représente jusqu'à 25 %, notamment jusqu'à 20 %, de la profondeur de profil (T₁).

6. Pneumatique de véhicule selon l'une quelconque des revendications 1 à 5, **caractérisé en ce que** la profondeur (tₐ) de la section de bord d'entaille (3a) est de 250 % à 350 %, notamment de 290 % à 310 %, de la profondeur (t_{b}) de la section principale d'entaille (3b).

7. Pneumatique de véhicule selon l'une quelconque des revendications 1 à 6, **caractérisé en ce que** la section de bord d'entaille (3a), vue en coupe transversale de l'entaille (3), s'étend sous la forme d'une onde, notamment sous la forme d'une onde harmonique, de manière particulièrement préférée sous la forme d'une onde harmonique en zigzag ou d'une onde harmonique en dents de scie.

8. Pneumatique de véhicule selon l'une quelconque des revendications 1 à 7, **caractérisé en ce que** l'entaille (3) est réalisée de manière rectiligne en vue de dessus - par rapport à sa ligne centrale (m_{E}) - et la section de bord d'entaille (3a), vue de dessus, s'étend de manière rectiligne.

9. Pneumatique de véhicule selon l'une quelconque des revendications 1 à 8, **caractérisé en ce que** la section principale d'entaille (3b), vue de dessus, s'étend au moins sur la majeure partie de son étendue, notamment sur au moins 70 % de sa longueur (l_{b}) déterminée le long de la ligne centrale (m_{E}) de l'entaille (3), sous la forme d'une onde, notamment sous la forme d'une onde harmonique, de manière particulièrement préférée sous la forme d'une onde harmonique en zigzag ou d'une onde harmonique en dents de scie.

10. Pneumatique de véhicule selon la revendication 9, **caractérisé en ce que** la longueur d'onde (λ_{b}) de l'onde de la section principale d'entaille (3a) est de 25 % à 40 %, notamment jusqu'à 33 %, de la longueur (l_{b}) déterminée le long de la ligne centrale (m_{E}) de l'entaille (3).

11. Pneumatique de véhicule selon la revendication 9 ou 10, **caractérisé en ce que** l'amplitude (A_{b}) de l'onde de la section principale d'entaille (3a) est de 75 % à 200 %, notamment de 125 % à 175 %, de la largeur (b_{E}) de l'entaille (3).

12. Pneumatique de véhicule selon l'une quelconque des revendications 7 à 11, **caractérisé en ce que** le tracé de l'onde présent en coupe transversale de l'entaille (3) dans la section de bord d'entaille (3a) est poursuivi dans la section principale d'entaille (3b).

13. Pneumatique de véhicule selon l'une quelconque des revendications 1 à 12, **caractérisé en ce que** la longueur (l_{b}) de la section principale d'entaille (3b) représente jusqu'à 85 % de la longueur (l_{E}) de l'entaille (3).

14. Pneumatique de véhicule selon l'une quelconque des revendications 1 à 13, **caractérisé en ce que** l'espace creux (4, 4^{I} à 4^{III}) présente un plan de symétrie (E₄) s'étendant dans la direction radiale, qui contient la ligne centrale (m_{E}) de l'entaille (3) orientée, en vue de dessus, dans la direction d'étendue de l'entaille (3).

15. Pneumatique de véhicule avec une bande de roulement avec au moins une nervure de profil (1) qui est délimitée de chaque côté par une rainure circonférentielle (2a) réalisée à la profondeur de profil (T₁), selon l'une quelconque des revendications 1 à 14, **caractérisé en ce que** les entailles (3) sont formées chacune par la section principale d'entaille (3b) et deux sections de bord d'entaille (3a), les sections de bord d'entaille (3a) débouchant chacune dans un espace creux (4, 4^{I} à 4^{IV}) partant de la rainure circonférentielle (2) respective, réalisé plus large que l'entaille (3).
